# EUROPEAN PATENT SPECIFICATION

(11) **EP 2 581 263 B1**
(45) Date of publication and mention of the grant of the patent: **23.04.2014**
(21) Application number: 12186182.7
(22) Date of filing: 26.09.2012
(51) Int. Cl.: B60P 1/52, B62B 3/06

(54) **Load handling trolley**
Lasttransportwagen
Chariot de manipulation de charges

(30) Priority: 11.10.2011 GB 201117532
(43) Date of publication of application: 17.04.2013
(73) Proprietor: Blackrock Engineering Limited, Great Budworth, Nr. Northwich, Cheshire CW9 6HF (GB)
(72) Inventor: Kordel, Wojtek, Liverpool, L19 2NY (GB)
(74) Representative: Cawley, Aimee Elizabeth

(56) References cited:
- WO-A1-96/35603
- GB-A- 685 139
- JP-A- 2001 106 488
- JP-A- 2005 154 126
- US-A- 1 785 368
- US-A- 3 331 520

## Description

This invention concerns a load-handling trolley of the type that normally runs in a channel led track, and which comprises an elongate load engager raisable and lowerable relative to bogies via a ramp and roller arrangement, when the engager and the bogie assembly are caused to move longitudinally relative to each other.

Load-handling trolleys of the type that normally in a channel-led track are used, for example, for moving loaded pallets and the like. The weight of such loads can vary considerably from a few tens of kilograms up to, for instance, 5000 kg or more. Typically, a lift actuating mechanism of a load-handling trolley comprises a crank-based configuration. A user will insert a handle into the crank-based configuration and pivot the crank-based mechanism using that handle to raise the load. However, when it comes to lowering the load, the load acts on the load-handling trolley to cause a significant degree of force to be passed back through the crank-based mechanism and to the handle operated by the user. A user holding that handle will experience this force. This might be referred to as "kick-back" or "backlash". This kick-back can be significant enough to cause injury to a user of the load-handling trolley or, at the very least, might impose a significance strength requirement on the user to overcome and/or accommodate the force.

It is desirable to provide a load-handling trolley that does not have the associated kick-back problem referred to above, but which still allows large (e.g. 3000-5000 kg or higher) loads to be lifted. A proposed solution has been the use of a hydraulic pump, ubiquitous in the related field of pump-based pallet trolleys and the like. A trolley having a hydraulic-based lift actuating mechanism allows a load to be easily and smoothly raised. When the load needs to be lowered, the hydraulic-based system can be released to allow the load to be lowered. The release is such that there is no kick-back associated with that release, obviating or mitigating risks to the user when lowering the load.

Although the use of a hydraulic-based lift actuating mechanism solves the potential safety issues of a crank-based lift actuating mechanism, the use of a hydraulic-based lift actuating mechanism is still not ideal. One reason for this is that a hydraulic-based lift actuating mechanism needs to be sufficiently engineered to cope with the pressures that will be encountered during lifting of typical loads. It has been found that the hydraulic-based lift actuating mechanism may need be able to successfully accommodate and manage a pressure in excess of 200 kNm⁻². In order for the hydraulic-based lift actuating mechanism to be able to operate at these pressures, specialist and precision engineering is required in the construction and assembly of the hydraulic-based actuating mechanism. For instance, it is expected that machine tolerances and the like required to construct such a lift actuating mechanism may be of the order of microns, which is unusually high in the load-handling trolley industry. Such precision engineering leads to a significant increase in manufacturing costs, and also associated and subsequent maintenance costs and the like (e.g. the cost of spare parts). For instance, it is expected that a hydraulic-based load-handling trolley may cost as much as three times the amount of a typical, standard crank-based load-handling trolley. A cost increase of any kind is, of course, not ideal. However, a cost increase of almost a factor of three could dissuade customers from buying what might be described as a safer load-handling trolley based on hydraulics, and instead encourage the customer to buy the perhaps less safe crank-based load-handling trolley. This is clearly not ideal for a user of the trolley, or for the purchaser of the trolley.

In addition, or in the alternative to, the cost issues described above, there are also issues associated with the use of the hydraulic-based load-handling trolley. If, for whatever reason, hydraulic fluid leaks from the hydraulic-based lift actuating mechanism, the fluid can contaminate the load that is being carried. This is highly undesirable, since any such contamination may result in the load being unusable and, for instance, unsellable. For instance, load-handling trolleys find common usage in the industry of paper manufacture and the like, and in particular in moving pallets or the like that carry paper reels. If hydraulic fluid was to come into contact with and spoil a paper reel, the entire paper reel may not be suitable for sale, resulting in a significant loss for the company that has purchased and used the hydraulic-based load-handling trolley.

It is also known, e.g. from US3331520, which discloses a trolley according to the preamble of claim 1 and a mechanism according to the preamble of claim 12, to provide a freight pallet carrier including an arrangement for transporting loaded pallets on wheels and subsequently leaving them on solid supports between movements so that friction will maintain placement of the pallet on the carrier. A lifting mechanism is provided, mounted on the wheeled carrier, for transferring the weight of the loaded pallet from the wheels to the solid supports, and *vice versa,* with said mechanism being similar in general principle to the action of an automobile jack.

It is an object of the present invention to provide a load handling trolley that obviates or mitigates one or more problems of the prior art, whether identified herein or elsewhere, or to provide a load handling trolley that provides an alternative to existing load handling trolleys.

According to a first aspect of the present invention, there is provided a load handling trolley of the type that normally runs in a channel led track, the load handling trolley comprising: an elongate load engager having a load receiving top; at least one bogie assembly; a ramp and roller arrangement, the elongate load engager being raisable and lowerable relative to the at least one bogie assembly via the ramp and roller arrangement, when the load engager and the bogie assembly are caused to move longitudinally relative to each other; and a lift actuating mechanism assembly for moving the load engager and the bogie assembly longitudinally relative to one another, the lift actuating mechanism comprising a ratchet assembly, wherein the ratchet assembly comprises a housing, in which is at least partially located: a pinion; a receiver, for receiving an actuating handle of the lift actuating mechanism, the receiver and pinion being rotatable about a common axis; and a rack, engageable with the pinion, and in connection with the at least one bogie assembly, characterized in that the ratchet assembly further comprises a ratchet pawl attached to the receiver; and a load holding pawl attached to the housing.

The ratchet assembly may be adapted to effect ratcheted movement of the load engager and the bogie assembly longitudinally relative to one another in order to effect raising of the load engager. The ratchet assembly may be adapted to effect free, non-ratcheted movement of the load engager and the bogie assembly longitudinally relative to one another in order to effect lowering of the load engager.

The housing may be one or more walls, and may partially or totally surround the pinion and/or rack.

The housing may comprise a tongue, the receiver being moveable to a position which causes the tongue to urge against the ratchet pawl and to cause disengagement of the ratchet pawl from the pinion, and/or to maintain disengagement. The receiver may comprise an abutment surface, the receiver being moveable to a position which causes the abutment surface to urge against the load holding pawl to cause disengagement of the load holding pawl from the pinion, and/or to maintain disengagement. The position of the receiver for disengagement, or maintenance of disengagement, of the ratchet pawl may be substantially the same as the position for disengagement, or maintenance of disengagement, of the load holding pawl.

The position for disengagement may be substantially when the receiver is rotated toward the load engager, and orientated substantially at or beyond a normal to a plane in which the load engager substantially extends. In general, the position for disengagement may be outside of a range of positions of the receiver within which range ratcheting may be achieved. This is so that the ratchet cannot be accidentally engaged when release is required and/or so that the ratchet cannot be accidentally released when ratcheting is required.

The rack may be slideable (which includes rollable) within the housing along one or more guides. The sliding movement of the rack may be constrained to being along substantially a single axis and/or such that the rack remains level during sliding. This may ensure good and reliable operation of the lifting mechanism. The rack and/or one or more guides may comprise rollers or wheels.

The load handling trolley may further comprise a retaining arrangement for keeping the load engager in connection with the at least one bogie assembly. This could involve one or more pins locatable in one or more grooves, slots or guides. Alternatively or additionally, any suitable arrangement may be provided to provide this functionality. This may simply prevent the load engager from being easily or unintentionally detached from the at least one bogie assembly.

According to a second aspect of the present invention, there is provided a lift actuating mechanism for a load handling trolley of the type that normally runs in a channel led track, the lift actuating mechanism comprising a ratchet assembly, wherein the ratchet assembly comprises a housing, in which is at least partially located: a pinion; a receiver, for receiving an actuating handle of the lift actuating mechanism, the receiver and pinion being rotatable about a common axis; and a rack, engageable with the pinion, and in connection with at least one bogie assembly, characterized in that the ratchet assembly further comprises a ratchet pawl attached to the receiver; and a load holding pawl attached to the housing. The lift actuating mechanism of the second aspect of the invention may have any one or more features as described in relation to the first aspect of the invention.

The invention will now be further described, by way of example only, with reference to the accompanying Figures, in which:
Figure 1 shows a load handling trolley;
Figure 2 is a section through the load handling trolley of Figure 1 in its lowered position;
Figure 3 is an underside view of the trolley of Figure 1;
Figure 4 is a section through the trolley of Figure 1 in its raised position;
Figure 5 is an exploded view of the trolley of Figure 1;
Figure 6 shows a part of the trolley of Figure 1; and
Figure 7 shows a lift actuating mechanism according to an embodiment of the present invention, suitable for replacing the lift actuating mechanism shown in and described with reference to the load handling trolley of Figures 1 to 6.

In the Figures, the same features appearing in different Figures have been given the same reference numeral, for consistency and clarity.

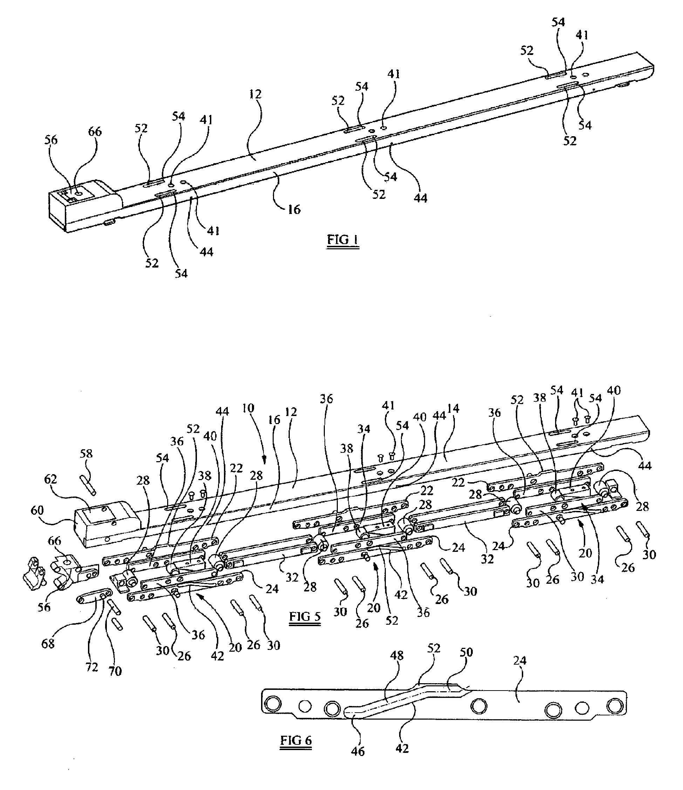

Referring to the Figures 1 to 6 in combination, a load handling trolley 10 is shown. The load handling trolley has a load engager 12 of inverted channel section, so that its web or top 14 will be upwards to engage a load and its side walls 16, 18 will depend downwardly. Between the side walls 16, 18 and in closely adjacent clearance thereto are one or more bogie assemblies 20. The bogie assemblies 20 have spaced sides 22, 24 interconnected by studs 26, rollers 28 and journalled rods 30 for articulation links 32 between bogie assemblies 20, of which there are at least two per load engager 12. In another embodiment (not shown), a single bogie assembly may be used, extending along the length of the load engager.

The studs 26 also interconnect an arrangement 34 for raising and lowering the bogie assemblies situated between the bogie side walls. The arrangement 34 comprises a pair of spaced walls 36 having a roller 38 mounted there between. Associated with the roller 38 is a ramp 40 secured to the underside of the load engager 12 by screws 41, whereby, from a lowered position, movement of the bogie assemblies 20 along the load engager 12 causes the roller 38 to move over the ramp 40 to urge the load engager upwards relative to the bogie assemblies 20.

Outside faces of the sides 22, 24 of the bogie assemblies 20 have grooves 42 therein (see, in particular, Figure 6), along which pins 44 on the inside faces of the load engager side walls 16, 18 travel as the load engager moves upwardly or downwardly relative to the bogie assemblies. The pins 44 and grooves together ensure positive retention between the load engager and he bogie assemblies.

The grooves 42 have a first lower part 46 parallel to the lower edges of the sides 22, 24 of the bogie assemblies 20, an angled major portion 48 corresponding to the slope of the ramp 40 and an upper portion 50 parallel to the top edge of the sides of the bogie assemblies. In the example shown, the upper portion 50 occupies a projection 52 extending above the major part of the top edge of the sides of the bogie assemblies. The end of the lower part 46 of the groove 42 is closed, whilst the end of the upper part 50 of the groove 42 is open to allow fitting of the bogie assemblies to the load engager.

In order to provide maximum elevation of the load engager 12 relative to the bogie assemblies 20, the projections 52 of the sides of the bogie assemblies 20 are accommodated in the lowered position in apertures 54 in the top of the load engager 12, so as not to be proud thereof. When the bogie assemblies 20 are moved longitudinally relative to the load engager 12, the grooves 42 in the projections 52 allow the load engager to be raised higher than would be possible with conventional bogie assembly sides.

In another embodiment (not shown), there may be no projection 52 extending above the major part of the top edge of the sides of the bogie assemblies. In such an embodiment, an extent of the groove will be limited by the top edge of the sides of the bogie assemblies.

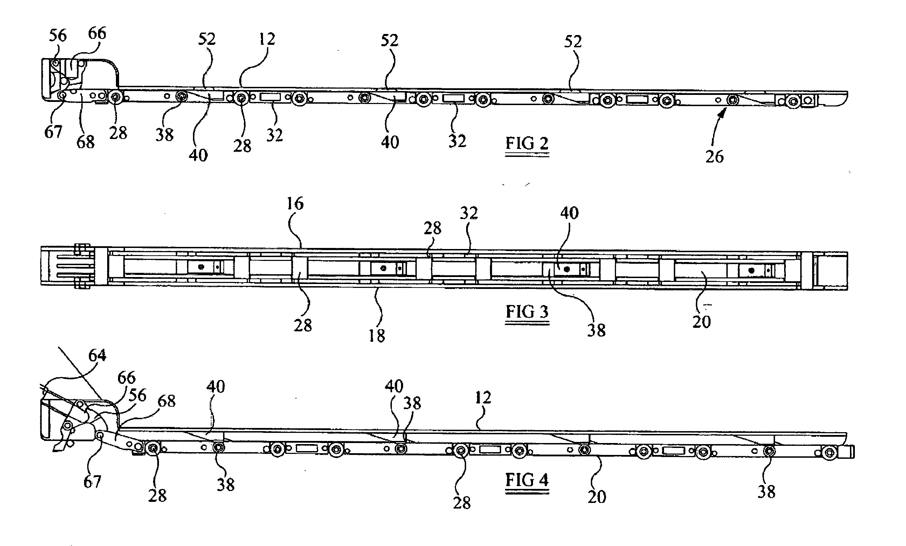

In this example, a lift actuating mechanism for moving the bogie assemblies 20 longitudinally relative to the load engager is conventional, and is typical of existing lift actuating mechanisms for load handling trolleys. In this example, a crank 56 is pivotally connected between the side walls 16, 18 of the load engager 12 to pivot about a pin 58, so as to be movable between the positions illustrated in Figures 2 and 4. The side walls 16, 18 of the load engager are connected by an end wall 60 and the top of the load engager at its end is open at 62 to receive an operating handle (i.e. a lever) 64 that engages in hole 66 in the top of the crank 56. Pivotally connected at axis 67 to the crank is a pair of laterally spaced links 68. The pair of crank links 68 is pivotally connected to a respective one of the sides 22, 24 of the bogie assembly 20 by way of a pivot pin connection 70. Each crank link 68 carries a pivot pin 72, which acts as an abutment.

In Figure 2 the mechanism is shown with the load engager 12 in its lowered position. When it is required to elevate the load engager relative to a track, the operating handle 64 is inserted into the crank 56 and pivoted anti-clockwise in the illustrated example to move the crank and thus displace the bogie assembly 20 longitudinally by action of the link. As previously described, the displacement of the bogie assembly causes the ramp 40 to be raised by the roller 38 and hence the load engager is moved to a raised position as shown in Figure 4 of the drawings, for movement of the load handling trolley along the track. The maximum displacement is such as to move the pins 44 along the grooves 42 to their upper portions 50.

Where the rollers 28 are in contact with the track in normal operation of the load handling trolley, a clearance remains between the pin 72 and the end surface of the bogie assembly sides 22, 24. In the situation where the load handling trolley projects beyond the end of the track, the absence of the abutment pin 72 would result in the considerable angular displacement between the link 68 and the bogie assembly 20. However, by providing the abutment pin 72, angular movement is constrained and, therefore, despite the fact that the end bogie is not sufficiently supported, longitudinal movement is generated to give the desired lift by movement of the roller 38 against the ramp 40.

As shown in the Figures, one, more or all ramps 40 of the ramp 40 and roller 38 arrangement may be provided on an underside of the load receiving top 14, and one, more or all rollers 38 of the ramp 40 and roller 38 arrangement may be provided by the at least one bogie assembly 20. Alternatively or additionally, and in an embodiment not shown in the Figures, one, more or all rollers of the ramp and roller arrangement may be provided on an underside of the load receiving top and one, more or all ramps of the ramp and roller arrangement may be provided by the at least one bogie assembly.

Figures 1 to 6 have described a load-handling trolley provided with a crank-based lift actuating mechanism. As referred to above, such a mechanism is not ideal, and particularly not ideal when the loads being carried are significant enough to cause significant kick-back via an operating handle that could result in injury to a user of the load-handling trolley. A potential solution in the form of a hydraulic-based lift actuating mechanism is also not ideal due to, for example, significant increases in manufacturing and maintenance costs, and also due to the potential for hydraulic fluid used by the hydraulic-based lift actuating mechanism to contaminate loads carried by the load-handling trolley. The present invention provides a solution to all of these problems.

According to the present invention there is provided a load-handling trolley of the type that normally runs in a channel-led track. The load-handling trolley comprises an elongate load engager having a load receiving top. At least one bogie assembly is also provided. A ramp and roller arrangement is also provided, via which the elongate load engager is raisable and lowerable relative to the at least one bogie assembly. The raising and lowering is achievable by causing the load engager and the bogie assembly to move longitudinally relative to one another. The load-handling trolley is additionally provided with a lift actuating mechanism assembly for, as described above, moving the load engager and the bogie assembly longitudinally relative to one another (for, also as described above, raising and lowering the load engager relative to the at least one bogie assembly). The invention may be distinguished from existing load-handling trolleys by the nature of the lift actuating mechanism. In accordance with an embodiment of the present invention, the lift actuating mechanism comprises a ratchet assembly. It is this ratchet assembly which obviates or mitigates the problems described above in relation to the prior art, or which at the very least provides a viable alternative to crank or hydraulic-based lift actuating mechanisms.

The ratchet assembly is usable to effect ratcheted movement of the load engager and the bogie assembly longitudinally relative to one another in order to effect (ratcheted) raising of the load engager. Conversely, the ratchet is usable to effect free (non-ratcheted) movement of the load engager and the bogie assembly longitudinally relative to one another in order to effect free (non-ratcheted) lowering of the load engager.

The use of a ratchet is advantageous because it allows for the lifting of heavy loads in a ratcheted manner, whilst at the same time allowing the load to be quickly and easily released with no kick-back on a handle used to actuate the ratchet assembly. Furthermore, the use of a ratchet assembly is far cheaper to design, construct and maintain than a hydraulic-based assembly. This reduces the cost of the load-handling trolley as a whole, and also the maintenance thereof. Finally, the use of a ratchet assembly requires no hydraulic fluids, which could otherwise leak out of the assembly and spoil or damage loads carried by the load-handling trolley.

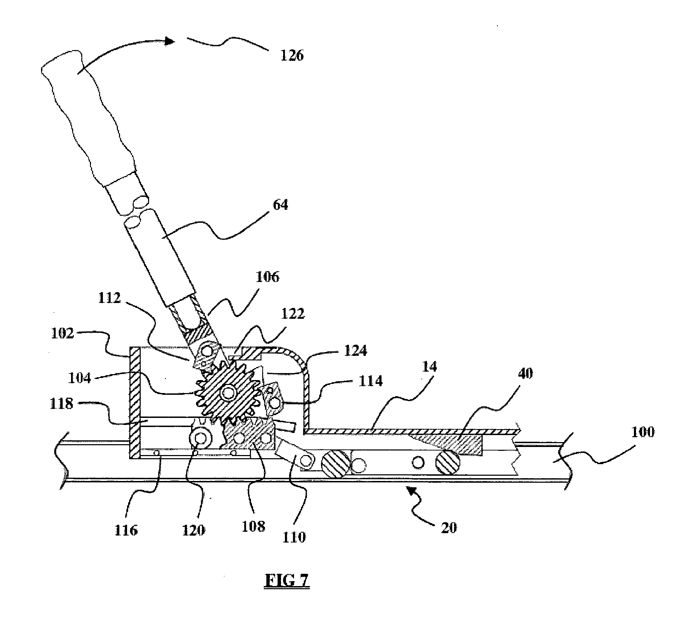

Figure 7 schematically depicts a part-section view of a lift actuating mechanism assembly comprising a ratchet assembly, in accordance with an embodiment of the present invention. The ratchet assembly is shown in relation to the top of components already shown in and described with reference to Figures 1 to 6. The ratchet assembly is shown in relation to the load engager top 14, the ramp 40 attached to the underside of the top of the load engager 14, a bogie assembly 20 and a track 100 along which the bogie assembly 20 runs, or is led. The ratchet assembly, as will now be described, may be used in place of the crank-based assembly of Figures 1 to 6.

Referring back to Figure 7, the ratchet assembly comprises a housing 102. The housing 102 may be, may form part of, or may be connected to (e.g., attached to) a part of the load engager. Located within the housing is a pinion 104. A receiver 106 is also provided. The receiver 106 is for receiving an actuating handle 64 of the lift actuating mechanism. The receiver 106 and the pinion 104 are rotatable about a common axis. The ratchet assembly further comprises a rack 108. Different parts of the rack 108 are shown in part-section view and full side-on view in the Figure, so that its overall structure is more readily understandable. The rack 108 is engagable with the pinion 104, such that rotation of the pinion 104 causes linear movement of the rack 108. The rack 108 is connected by a link 110 to the bogie assembly 20, such that movement of the rack 108 causes appropriate and corresponding movement of the bogie assembly 20.

The ratchet nature of the assembly is now described. Engageable with the pinion 104 are two pawls. A ratchet pawl 112 is provided, which is pivotally fixed to the receiver 106, and is used for ratcheting of the pinion 104. A load handling pawl 114 is also provided, and which is pivotally fixed to the housing 102. Although not visible in the Figure, each of the pawls 112, 114 are in connection with or comprise a return spring, for returning (or in other words biasing) each of the pawls 112, 114 into engagement with the pinion 104.

In use, ratcheted motion may be achieved by appropriate (and potentially repetitious) pivotal movement of the handle 64. This will cause ratcheted rotation of the pinion 104, via appropriate engagement of the ratchet pawl 112, which will in turn cause movement of the rack 108 that is in engagement with the pinion 104. The rack 108 is slidable within the housing along one or more guides 116, 118. The guides, which may be (or may be referred to as, rails) 116, 118 are, at least in this embodiment, located either side of (above and below) wheels or rollers or the like 120 of the rack 108, such that sliding movement of the rack 108 is constrained to being substantially along a single axis and/or such that the rack 108 remains level during sliding. When ratcheted movement of the pinion 104 is undertaken, the rack 108 will slide longitudinally towards the bogie assembly 20 which, by the link 110, will cause movement of the bogie assembly 20 and appropriate raising of the load engager.

After raising of the load engager it may, of course, be necessary to at some point lower the load engager. In accordance with the present invention, this may be simply and quickly achieved, with no back-lash or kick-back of the handle 64, by a simple release of the ratchet mechanism. This release, and the configuration for achieving such release, will now be described.

The housing 102 comprises a tongue 122. The tongue 122 may be a part of the housing 102, or attached to the housing 102. The receiver 106, which carries the ratchet pawl 112, is moveable to a position which causes the tongue 122 to urge against the ratchet pawl 112 and to cause disengagement of the ratchet pawl 112 from the pinion 104 (and/or to maintain such disengagement). The receiver 106 is also provided with an abutment surface 124. The receiver 106 is also moveable to a position which causes the abutment surface 124 to urge against the load holding pawl 114 to cause disengagement of the load holding pawl 114 from the pinion 104 (and/or maintain such disengagement). Most preferably, the position of the receiver 106 for disengagement of the ratchet pawl 112 is substantially the same as the position for disengagement of the load holding pawl 114. This means that both of the ratchet pawl 112 and load holding pawl 114 will be disengaged at the same time, allowing the pinion 104 to be rotatable. A load urging downwardly on the top surface of the load engager 14 urges the ramp 40 against the bogie assembly 20 which, in turn, pushes against and moves the rack 108. The rack 108 is allowed to slide, since the pinion 104 with which it is engaged is now free to rotate. No loading force is transmitted through to the receiver 106 and thus handle 64. There can be no kick-back.

The tongue 122 and abutment surface 124 preferably maintain disengagement of the ratchet pawl 112 and load holding pawl 114 when the receiver is in the aforementioned position, thus preventing the ratchet pawl 112 and load holding pawl 114 from coming into contact with the rotatable pinion 104. If such maintenance was not present, rotation of the pinion could be limited or prevented and/or the pinion 104 or pawls 112, 114 could be damaged. When the receiver 106 is moved out of the disengagement position, the previously described return springs return (or in other words bias) each of the pawls 112, 114 into engagement with the pinion 104. Ratcheting of the pinion 104 (and thus lifting of a load) may then, again, take place.

It will be appreciated that the position of the receiver 106 for disengagement is preferably outside of a range of positions of the receiver 106 within which range ratcheting of the pinion 104 may be achieved. In the configuration shown in Figure 7, the position for disengagement is substantially when the receiver 106 is rotated or pivoted toward the load engager (or a load bearing surface thereof, for example the top 14) via appropriate movement 126 of an engaged handle 64, such that the receiver is orientated substantially at or beyond a normal to a plane in which the load engager substantially extends. In this position, the tongue 122 of the housing 102 and the abutment surface 124 of the receiver 106 perform their disengaging functions.

In an alternative embodiment (not shown) the guides for guiding movement of the rack may be provided with wheels or rollers, instead of providing the rack with wheels or rollers.

In summary, it will be appreciated that in accordance with an embodiment of the present invention, loads may be conveniently and quickly raised using the described ratchet assembly. With appropriate construction, the ratchet assembly may be used to lift loads far more easily than in comparison with, for instance, a crank-based assembly, and far more cheaply than a hydraulic-based alternative. Using the ratchet assembly, lowering of the load may be achieved quickly and easily with no back-lash or kick-back, a problem associated with the use of crank-based actuating mechanisms. Finally, the ratchet assembly uses no hydraulic fluid to achieve the lowering or raising of the load, meaning that there is no hydraulic fluid that could be used to contaminate or spoil loads carried by the load handling trolley.

## Claims

1. A load handling trolley (10) of the type that normally runs in a channel led track (100), the load handling trolley (10) comprising:
an elongate load engager (12) having a load receiving top (14);
at least one bogie assembly (20);
a ramp-and-roller arrangement, the elongate load engager (12) being raisable and lowerable relative to the at least one bogie assembly (20) via the ramp-and-roller arrangement, when the load engager (12) and the bogie assembly (20) are caused to move longitudinally relative to each other; and
a lift actuating mechanism (34) for moving the load engager (12) and the bogie assembly (20) longitudinally relative to one another, the lift actuating mechanism (34) comprising a ratchet assembly, wherein the ratchet assembly comprises a housing (102), in which is at least partially located: a pinion (104);
a receiver (106), for receiving an actuating handle (64) of the lift actuating mechanism (34), the receiver (106) and pinion (104) being rotatable about a common axis; and a rack (108), engageable with the pinion (104), and in connection with the at least one bogie assembly (20),
**characterized in that** the ratchet assembly further comprises a ratchet pawl (112) attached to the receiver (106); and a load holding pawl (114) attached to the housing (102).

2. The load handling trolley (10) of any preceding claim, wherein the ratchet assembly is adapted to effect ratcheted movement of the load engager (12) and the bogie assembly (20) longitudinally relative to one another in order to effect raising of the load engager (12).

3. The load handling trolley (10) of claim 1 or claim 2, wherein the ratchet assembly is adapted to effect free, non-ratcheted movement of the load engager (12) and the bogie assembly (20) longitudinally relative to one another in order to effect lowering of the load engager (12).

4. The load handling trolley (10) of any claim 1, wherein the housing (102) comprises a tongue (122), the receiver (106) being moveable to a position which causes the tongue (122) to urge against the ratchet pawl (112) and to cause disengagement of the ratchet pawl (112) from the pinion (104) and/or to maintain disengagement.

5. The load handling trolley (10) of claims 1 or claim 4, wherein the receiver (106) comprises an abutment surface (124), the receiver (106) being moveable to a position which causes the abutment surface (124) to urge against the load holding pawl (114) to cause disengagement of the load holding pawl (114) from the pinion and/or to maintain disengagement.

6. The load handling trolley (10) of claim 4 and claim 5, wherein the position of the receiver (106) for disengagement, or maintenance of disengagement, of the ratchet pawl (112) is substantially the same as the position for disengagement, or maintenance of disengagement, of the load holding pawl (114).

7. The load handling trolley (10) of any of claims 4 to 6, wherein the position for disengagement is substantially when the receiver (106) is rotated toward the load engager (12), and orientated substantially at or beyond a normal to a plane in which the load engager (12) substantially extends.

8. The load handling trolley (10) of any of claims 1 to 7, wherein the rack (108) is slideable within the housing (102) along one or more guides (116,118).

9. The load handling trolley (10) of claim 8, wherein sliding movement of the rack (108) is constrained to being along substantially a single axis and/or such that the rack(108) remains level during sliding.

10. The load handling trolley (10) of claim 8 or 9, wherein the rack (108) and/or one or more guides (116,118) comprise rollers or wheels (120).

11. The load handling trolley (10) of any of preceding claim, further comprising a retaining arrangement adapted to retain the load engager (12) in connection with the at least one bogie assembly (20).

12. A lift actuating mechanism (34) for a load handling trolley (10) of the type that normally runs in a channel led track (100), the lift actuating mechanism (34) comprising a ratchet assembly, wherein the ratchet assembly comprises a housing (102), in which is at least partially located: a pinion (104); a receiver (106), for receiving an actuating handle (64) of the lift actuating mechanism (34), the receiver (106) and pinion (104) being rotatable about a common axis; and a rack (108), engageable with the pinion (104), and in connection with at least one bogie assembly (20),
**characterized in that** the ratchet assembly further comprises a ratchet pawl (112) attached to the receiver (106); and a load holding pawl (114) attached to the housing (102).

## Patentansprüche

1. Lasttransportwagen (10) der Art, die normalerweise in einer kanalgeführten Spur (100) läuft, wobei der Lasttransportwagen (10) Folgendes umfasst:
eine längliche Lasteingriffsvorrichtung (12), die einen Lastaufnahme-Oberteil (14) hat,
wenigstens eine Fahrgestell-Baugruppe (20),
eine Rampe-Rolle-Anordnung, wobei die längliche Lasteingriffsvorrichtung (12) über die Rampe-Rolle-Anordnung im Verhältnis zu der wenigstens einen Fahrgestell-Baugruppe (20) anhebbar und absenkbar ist, wenn veranlasst wird, dass sich die Lasteingriffsvorrichtung (12) und die Fahrgestell-Baugruppe (20) im Verhältnis zueinander in Längsrichtung bewegen, und
einen Hebebetätigungsmechanismus (34) zum Bewegen der Lasteingriffsvorrichtung (12) und der Fahrgestell-Baugruppe (20) im Verhältnis zueinander in Längsrichtung, wobei der Hebebetätigungsmechanismus (34) eine Sperrvorrichtungsbaugruppe umfasst, wobei die Sperrvorrichtungsbaugruppe ein Gehäuse (102) umfasst, in dem wenigstens teilweise Folgendes angeordnet ist: ein Ritzel (104), eine Aufnahme (106), zum Aufnehmen eines Betätigungshandgriffs (64) des Hebebetätigungsmechanismus (34), wobei die Aufnahme (106) und das Ritzel (104) um eine gemeinsame Achse drehbar sind, und eine Zahnstange (108), die mit dem Ritzel (104) in Eingriff gebracht werden kann und in Verbindung mit der wenigstens einen Fahrgestell-Baugruppe (20) steht,
**dadurch gekennzeichnet, dass** die Sperrvorrichtungsbaugruppe ferner eine Sperrklinke (112), die an der Aufnahme (106) befestigt ist, und eine Lasthalteklinke (114), die an dem Gehäuse (102) befestigt ist, umfasst.

2. Lasttransportwagen (10) nach einem der vorhergehenden Ansprüche, wobei die Sperrvorrichtungsbaugruppe dafür eingerichtet ist, eine gerastete Bewegung der Lasteingriffsvorrichtung (12) und der Fahrgestell-Baugruppe (20) im Verhältnis zueinander in Längsrichtung zu bewirken, um ein Anheben der Lasteingriffsvorrichtung (12) zu bewirken.

3. Lasttransportwagen (10) nach Anspruch 1 oder Anspruch 2, wobei die Sperrvorrichtungsbaugruppe dafür eingerichtet ist, eine wirkungsfreie, nicht gerastete Bewegung der Lasteingriffsvorrichtung (12) und der Fahrgestell-Baugruppe (20) im Verhältnis zueinander in Längsrichtung zu bewirken, um ein Absenken der Lasteingriffsvorrichtung (12) zu bewirken.

4. Lasttransportwagen (10) nach Anspruch 1, wobei das Gehäuse (102) eine Zunge (122) umfasst, wobei die Aufnahme (106) zu einer Stellung bewegt werden kann, die veranlasst, dass die Zunge (122) gegen die Sperrklinke (112) drückt und ein Ausrücken der Sperrklinke (112) von dem Ritzel (104) veranlasst und/oder das Ausrücken aufrechterhält.

5. Lasttransportwagen (10) nach Anspruch 1 oder Anspruch 4, wobei die Aufnahme (106) eine Widerlagerfläche (124) umfasst, wobei die Aufnahme (106) zu einer Stellung bewegt werden kann, die veranlasst, dass die Widerlagerfläche (124) gegen die Lasthalteklinke (114) drückt, um ein Ausrücken der Lasthalteklinke (114) von dem Ritzel zu veranlassen und/oder das Ausrücken aufrechtzuerhalten.

6. Lasttransportwagen (10) nach Anspruch 4 und Anspruch 5, wobei die Stellung der Aufnahme (106) zum Ausrücken oder Aufrechterhalten des Ausrückens der Sperrklinke (112) im Wesentlichen die gleiche ist wie die Stellung zum Ausrücken oder Aufrechterhalten des Ausrückens der Lasthalteklinke (114).

7. Lasttransportwagen (10) nach einem der Ansprüche 4 bis 6, wobei die Stellung zum Ausrücken im Wesentlichen ist, wenn die Aufnahme (106) zu der Lasteingriffsvorrichtung (12) hin gedreht und im Wesentlichen bei einer Senkrechten zu einer Ebene, in der sich die Lasteingriffsvorrichtung (12) im Wesentlichen erstreckt, oder über dieselbe hinaus ausgerichtet ist.

8. Lasttransportwagen (10) nach einem der Ansprüche 1 bis 7, wobei die Zahnstange (108) innerhalb des Gehäuses (102) entlang einer oder mehrerer Führungen (116, 118) verschiebbar ist.

9. Lasttransportwagen (10) nach Anspruch 8, wobei eine Gleitbewegung der Zahnstange (108) darauf eingeschränkt ist, entlang im Wesentlichen einer einzigen Achse zu erfolgen, und/oder derart, dass die Zahnstange (108) während des Gleitens auf gleichem Niveau bleibt.

10. Lasttransportwagen (10) nach Anspruch 8 oder 9, wobei die Zahnstange (108) und/oder eine oder mehrere Führungen (116, 118) Rollen oder Räder (120) umfassen.

11. Lasttransportwagen (10) nach einem der vorhergehenden Ansprüche, der ferner eine Rückhalteanordnung umfasst, die dafür eingerichtet ist, die Lasteingriffsvorrichtung (12) in Verbindung mit der wenigstens einen Fahrgestell-Baugruppe (20) zu halten.

12. Hebebetätigungsmechanismus (34) für einen Lasttransportwagen (10) der Art, die normalerweise in einer kanalgeführten Spur (100) läuft, wobei der Hebebetätigungsmechanismus (34) eine Sperrvorrichtungsbaugruppe umfasst, wobei die Sperrvorrichtungsbaugruppe ein Gehäuse (102) umfasst, in dem wenigstens teilweise Folgendes angeordnet ist: ein Ritzel (104), eine Aufnahme (106), zum Aufnehmen eines Betätigungshandgriffs (64) des Hebebetätigungsmechanismus (34), wobei die Aufnahme (106) und das Ritzel (104) um eine gemeinsame Achse drehbar sind, und eine Zahnstange (108), die mit dem Ritzel (104) in Eingriff gebracht werden kann und in Verbindung mit wenigstens einer Fahrgestell-Baugruppe (20) steht,
**dadurch gekennzeichnet, dass** die Sperrvorrichtungsbaugruppe ferner eine Sperrklinke (112), die an der Aufnahme (106) befestigt ist, und eine Lasthalteklinke (114), die an dem Gehäuse (102) befestigt ist, umfasst.

## Revendications

1. Chariot de manutention de charges (10) du type se déplaçant normalement dans une piste de guidage de canal (100), le chariot de manutention de charges (10) comprenant :
un moyen d'engagement de la charge allongé (12), comportant une partie supérieure de réception de la charge (14) ;
au moins un assemblage de bogie (20) ;
un ensemble rampe et galet, le moyen d'engagement de la charge allongé (12) pouvant être soulevé et abaissé par rapport audit au moins un assemblage de bogie (20) par l'intermédiaire de l'ensemble rampe et galet lorsque le moyen d'engagement de la charge (12) et l'assemblage de bogie (20) sont entraînés à se déplacer longitudinalement l'un par rapport à l'autre ; et
un mécanisme d'actionnement de levage (34), pour déplacer le moyen d'engagement de la charge (12) et l'assemblage de bogie (20) longitudinalement l'un par rapport à l'autre, le mécanisme d'actionnement de levage (34) comprenant un assemblage de rochet, l'assemblage de rochet comprenant un boîtier (102), dans lequel sont agencés au moins en partie : un pignon (104) ; un récepteur (106), pour recevoir une poignée d'actionnement (64) du mécanisme d'actionnement de levage (34), le récepteur (106) et le pignon (104) pouvant être tournés autour d'un axe commun ; et une crémaillère (108), pouvant s'engager avec le pignon (104), en connexion avec le au moins un assemblage de bogie (20) ;
**caractérisé en ce que** l'assemblage de rochet comprend en outre un cliquet à rochet (112) fixé sur le récepteur (106) et un cliquet de retenue de la charge (114) fixé sur le boîtier (120).

2. Chariot de manutention de charges (10) selon l'une quelconque des revendications précédentes, dans lequel l' assemblage de rochet est adapté pour entraîner un déplacement à encliquetage du moyen d'engagement de la charge (12) et de l'assemblage de bogie (20) longitudinalement l'un par rapport à l'autre, en vue d'entraîner le soulèvement du moyen d'engagement de la charge (12).

3. Chariot de manutention de charges (10) selon les revendications 1 ou 2, dans lequel l'assemblage de rochet est adapté pour entraîner un déplacement sans encliquetage du moyen d'engagement de la charge (12) et de l'assemblage de bogie (20) longitudinalement l'un par rapport à l'autre, en vue d'entraîner l'abaissement du moyen d'engagement de la charge (12).

4. Chariot de manutention de charges (10) selon la revendication 1, dans lequel le boîtier (102) comprend une languette (122), le récepteur (106) pouvant être déplacé vers une position entraînant la languette (122) à exercer une poussée contre le cliquet à rochet (112) et à entraîner le dégagement du cliquet à rochet (112) du pignon (104) et/ou le maintien du dégagement.

5. Chariot de manutention de charges (10) selon les revendications 1 ou 4, dans lequel le récepteur (106) comprend une surface de butée (124), le récepteur (106) pouvant être déplacé vers une position entraînant la surface de butée (124) à exercer une poussée contre le cliquet de retenue de la charge (114) pour entraîner le dégagement du cliquet de retenue de la charge (114) du pignon et/ou pour maintenir le dégagement.

6. Chariot de manutention de charges (10) selon les revendications 4 et 5, dans lequel la position du récepteur (106), en vue du dégagement ou du maintien du dégagement du cliquet à rochet (112 est essentiellement identique à la position destinée au dégagement ou a maintien du dégagement du cliquet de retenue de la charge (114).

7. Chariot de manutention de charges (10) selon l'une quelconque des revendications 4 à 6, dans lequel la position destinée au dégagement est essentiellement atteinte lorsque le récepteur (106) est tourné vers le moyen d'engagement de la charge (12), et est orientée essentiellement au niveau ou au-delà d'une ligne normale par rapport à un plan dans lequel s'étend pour l'essentiel le moyen d'engagement de la charge (12).

8. Chariot de manutention de charges (10) selon l'une quelconque des revendications 1 à 7, dans lequel la crémaillère (108) peut glisser dans le boîtier (102) le long d'un ou de plusieurs guides (116, 118).

9. Chariot de manutention de charges (10) selon la revendication 8, dans lequel le déplacement par glissement de la crémaillère (108) est limité à se faire le long de essentiellement un seul axe et/ou de sorte que la crémaillère (108) reste à niveau au cours du glissement.

10. Chariot de manutention de charges (10) selon les revendications 8 ou 9, dans lequel la crémaillère (108) et/ou un ou plusieurs guides (116, 118) comprennent des rouleaux ou des roues (120).

11. Chariot de manutention de charges (10) selon l'une quelconque des revendications précédentes, comprenant en outre un assemblage de retenue adapté pour retenir le moyen d'engagement de la charge (12) en connexion avec le au moins un assemblage de bogie (20).

12. Mécanisme d'actionnement de levage (34) pour un chariot de manutention de charges (10) du type se déplaçant normalement dans une piste de guidage de canal (100), le mécanisme d'actionnement de levage (34) comprenant un assemblage de rochet, l'assemblage de rochet comprenant un boîtier (102), dans lequel sont agencés au moins en partie un pignon (104), un récepteur (106), pour recevoir une poignée d'actionnement (64) du mécanisme d'actionnement du levage (34), le récepteur (106) et le pignon (104) pouvant tourner autour d'un axe commun ; et une crémaillère (108), pouvant s'engager avec le pignon (104), en connexion avec au moins un assemblage de bogie (20) ;
**caractérisé en ce que** l'assemblage de rochet comprend en outre un cliquet à rochet (112) fixé sur le récepteur (106) ; et un cliquet de retenue de la charge (114) fixé sur le boîtier (102).
